Europäisches Patentamt

European Patent Office

Office européen des brevets

(11) Publication number: **0 055 334**
**B1**

(12) **EUROPEAN PATENT SPECIFICATION**

(45) Date of publication of patent specification: **30.01.85**

(51) Int. Cl.⁴: **G 11 B 5/55, H 02 K 41/035**

(21) Application number: **81107917.7**

(22) Date of filing: **05.10.81**

(54) Magnetic recording disk file.

(30) Priority: **31.12.80 US 221607**
**31.12.80 US 221866**

(43) Date of publication of application:
**07.07.82 Bulletin 82/27**

(45) Publication of the grant of the patent:
**30.01.85 Bulletin 85/05**

(84) Designated Contracting States:
**DE FR GB IT**

(56) References cited:
**EP-A-0 011 149**
**WO-A-81/01223**
**DE-A-2 654 075**
**DE-U-7 716 251**
**US-A-3 136 934**
**US-A-3 416 535**

**FEINWERKTECHNIK UND MICRONIC Vol. 77,
No. 4, 1973, München O. E. OLBRICH "Aufbau
und Kennwerte elektrodynamischer
Linearmotoren als Positionierer für
Plattenspeicher"
IBM TECHNICAL DISCLOSURE BULLETIN Vol.
17,No. 10, 1975, New York R.W. LISSNER et al
"Disk file actuator" pages 3016 to 3018**

(73) Proprietor: **International Business Machines
Corporation
Old Orchard Road
Armonk, N.Y. 10504 (US)**

(72) Inventor: **Garwin, Richard Lawrence
16 Ridgecrest East
Scarsdale New York 10583 (US)**
Inventor: **Thompson, David Allen
Twin Lakes Road
South Salem New York 10590 (US)**
Inventor: **Scranton, Robert Alan
Spring Valley Road
Ossining New York 10562 (US)**
Inventor: **Worthington, Thomas Kimber
86 Riverview Avenue
Tarrytown New York 10591 (US)**

(74) Representative: **Lancaster, James Donald
IBM United Kingdom Patent Operations Hursley
Park
Winchester, Hants, S021 2JN (GB)**

## Description

Technical field

This invention relates to magnetic recording disk files or systems and more particularly to read/write head actuator systems for such disk systems.

In reading and recording with magnetic recording disk stacks, the speed of seek operations in moving from one random position to another as required by the random requirements of a data processing system is important. Present linear voice coil actuators involve moving masses, which, if they could be reduced in magnitude, would allow faster operation. There is a need for a low mass accurate linear actuator having a stroke which traverses the entire recording width of a disk.

Background art

United States Patent No. 3,735,163 of Dijkstra et al entitlted "Linear Motor for the Positioning of Magnetic Heads" shows a roller mounted bulky structure with a very large permanent magnet located to one side of the stack of disks. This arrangement has all of the mechanical problems to be overcome by this invention.

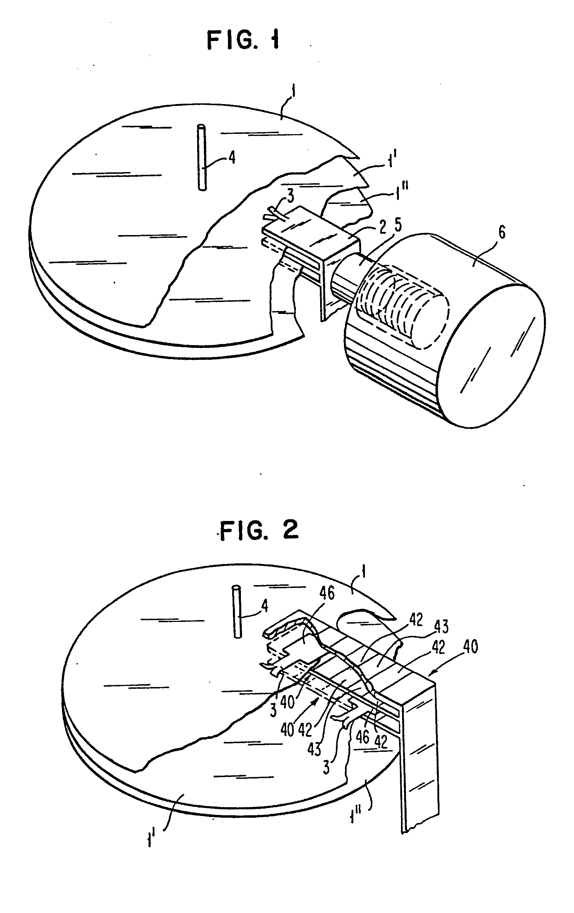

United States Patent No. 4,030,132 of Iftikar et al for a "Dual Mode Velocity Servo Control for a Linear Actuator Motor" shows the conventional voice coil type of actuator for a disk file in its Fig. 1A. A servo control system for that arrangement is described.

In United States Patent 3,899,699 of Griffing for a "Brushless Linear DC Motor Actuator", the stator includes a single very long permanent bar magnet with a north pole along one elongated side near the armature and a south pole along the outer side of the bar magnet. The motor is of an entirely different design from the instant invention.

An IBM Technical Disclosure Bulletin article of Lissner et al (I) dated March 1975, pp. 3016—8, entitled "Disk File Actuator", states upon page 3017, under item (c) that "A shielded magnetic core mounted to ground is cantilevered between the disks. The core has a slit gap 24 in which is suspended the flat rectangular coil 18. The magnetic structure is segmented into discrete magnets 26 a,b with alternating polarity. In the gaps 22 of adjacent magnets lie the two driving legs of the rectangular coil 18".

A similar article by Lissner et al (II) is entitled "Disk File Actuator Design Permits Increased Track Density", Computer Design, February 1979, pp. 116—120.

The overall Lissner et al actuator is a piggyback design with a long stroke conventional voice coil actuator 10 (Fig. 1 of Lissner et al) and a rotary stage which uses a pair of magnets and a flat pivoted coil to provide a rotary motion. Disadvantages of the pivoted coil are that it produces an orientation problem and a center shift (cited on page 119 of Lissner et al (II)) and it has a very limited stroke for the flat coil stage.

Lissner's pivot arm 14 is a rotary motor driven by its flat coil and two permanent magnets, with which it cooperates to pivot the head 16 back and forth as shown in Fig. 1 of Lissner et al.

In summary the design of Lissner et al I and II is limited to motion between the two closely spaced magnets 26a and b, so it has a short excursion unsuitable to reading/writing a large region on a disk. It is not a stepping motor and it utilizes and requires no feedback control in functioning as a motor. The introductory part of claim 1 is based on Lissner et al I.

R. K. Oswald, "Design of a Disk File Head Positioning Servo", IBM Journal of Research & Development Nov. 1974, pp. 506—512, describes a conventional closed loop servo system using an actuator whose properties, e.g., gain, force constant, inertia etc., are nominally independent of position. That system is directed to use with a voice coil actuator. Santana Patent 3,534,344 for "Method and Apparatus for Recording and Detecting Information" shows another voice coil actuator system.

Reference is also made to US—A—4151447 (DE—A—2654075) which shows a linear motor with arrays of magnets, and an armature with two flat coils.

Disclosure of invention

The disk file according to the invention is characterised in that the armature includes at least two flat coils, and at the ends of said array, the distal poles are flux gathering end magnets of permanent magnetic material having a flux producing capacity matched to collect the return flux from the pole elements adjacent to said distal poles of said stator, whereby fringing magnetic fields extending into the space in which said disk is located are minimized.

The coils are energized to interact with the magnets to propel the armature linearly along the array of magnets. The coils are driven alternately by a control system which moves the head to satisfy a position control input signal with the cooperation of feedback of actual head position information from the disk media to a microprocessor which monitors the instantaneous track position and the requested track number. The coils are used alternately because if an energized coil is centered over a boundary between magnets, even at full current the actuator can be stalled. Thus, for example, if a first coil is at dead center, the second coil must be used to drive the unit off dead center. The microprocessor coordinates such changes. The overall system permits continuous servo control rather than linear stepper motor control. Thus, the head can be held at a desired position by producing currents in the coils in a continuously variable fashion to counter varying disturbances or to accommodate runout or wobble of the disk.

This actuator enables attainment of Direct Access Storage Device (DASD) files with independently controlled actuators per disk surface. Studies of DASD system performance suggests that such an approach can result in significantly shorter average response times (at the request rates necessary for DASD files to be used with future processors) than those achievable with extensions of present voice coil actuator concepts. An array of such linear actuators is also less expensive than the conventional approach.

This linear motor has advantages in performance (acceleration, size of actuator and hence availability of more heads) cost, and in the possibility of separately controlled heads for each disk surface, rather than ganging the heads for all surfaces on a single drive. The much lower moving mass of this actuator has very substantial advantages in reducing the size of the massive frame now required, in allowing assembly by personnel who cannot lift heavy weights, and the like. It has advantages simultaneously in performance, cost, size, and weight.

Brief description of drawings

Fig. 1 shows a perspective schematic view of a prior art conventional voice coil actuator for magnetic recording disks.

Fig. 2 shows a similar schematic view of a novel actuator which, as shown, is not part of this invention but which was developed with, and has some of the same features as, this invention (Figs. 10—14).

Fig. 3 shows a perspective view of the stator inverted with respect to Fig. 2 with a portion of the upper shield cut away for convenience of illustration and a portion of the armature shown in juxtaposition with the stator, but moved to the left of its usual location above the magnets of the stator.

Fig. 4 shows a perspective view of a fragment of the magnet structure of the magnet array of Fig. 3 from a different point of view, with fragments of one of the coils illustrated.

Fig. 5 is a similar view to that of Fig. 4 with larger fragments of the coil and another coil and a number of additional magnets illustrated to show the alignment of the edges of the magnets with the spacing of the coils which assures that there will be sufficient offset to drive the armature at all positions without a "dead spot" with no net force from the two actuators.

Fig. 6.1 shows the force versus position curve for coil 24 for a given current in the coil, with the current reversing as shown.

Fig. 6.2 shows the force versus position curve of Fig. 6.1 with the fore versus position curve of coil 25 shown in dotted lines to show the offset of the two curves.

Fig. 6.3 shows the force versus position curve of the actuator coils with the combination indicating the result of switching the current on and off to the coils and reversing it under microprocessor control for provision of a relatively smooth integral force versus position curve.

Fig. 6.4 shows the force versus position curve provided after the gain to the actuator coils has been adjusted by the microprocessor to smooth out the curve electronically.

Fig. 6.5 shows the gain versus position curve for providing the correction of curves in Fig. 6.3 to produce the straight line of Fig. 6.4.

Fig. 7 is a perspective view of the overall actuator of Fig. 2 shown in greater detail.

Fig. 8 shows the actuator of Fig. 7 with a large portion of the upper magnetic shield (yoke) removed for convenience of illustration to show the mechanical relationship between parts of the stator and the armature.

Fig. 9 shows the servo mechanism and data processing control circuits for the coils driving the armature.

Fig. 10 shows a modification of the stator of Fig. 3, for a magnetic recording disk file according to this invention.

Fig. 11 is similar to Fig. 8 but relevant to the modification of Fig. 10.

Fig. 12 shows a schematic view of the magnetic structure of the stator of Figs. 10 and 11 with "half poles" removed in a side elevation view.

Fig. 13 shows a modification of the structure of Fig. 4 with the addition of iron closure shields at the ends of the yoke structure.

Fig. 14 is a similar view to Fig. 12 but showing the "half poles" at the ends of the array of magnetic poles.

Fig. 1 shows a conventional prior art, linear, voice coil actuator for moving the disk reading heads 3. The magnetic stator 6 provides a field which actutor solenoid 5 utilizes to move the heads 3 linearly. Carriage 2 connects the heads 3 to the solenoid 5. Disks 1, 1' and 1'' rotate about the spindle 4.

Fig. 2 illustrates a set of linear actuators (not in accordance with the current invention) each with a stator 40 including magnetic yokes (not shown for convenience of illustration) and each with an array of alternating polarity magnetic poles 42 and 43 extending within a space between a pair of the disks 1, 1' and 1'' and each with a very light weight carriage 46 carrying a head 3. The distributed stator 40 and the light weight shuttling carriages 46 of the armatures increase the speed and accuracy of positioning because of reduced mechanical stresses upon the system. Much of the reduction in mass is achieved by elimination of a comb-shaped support carriage member 2 between the force-producing coil 5 and the heads 3 in Fig. 1.

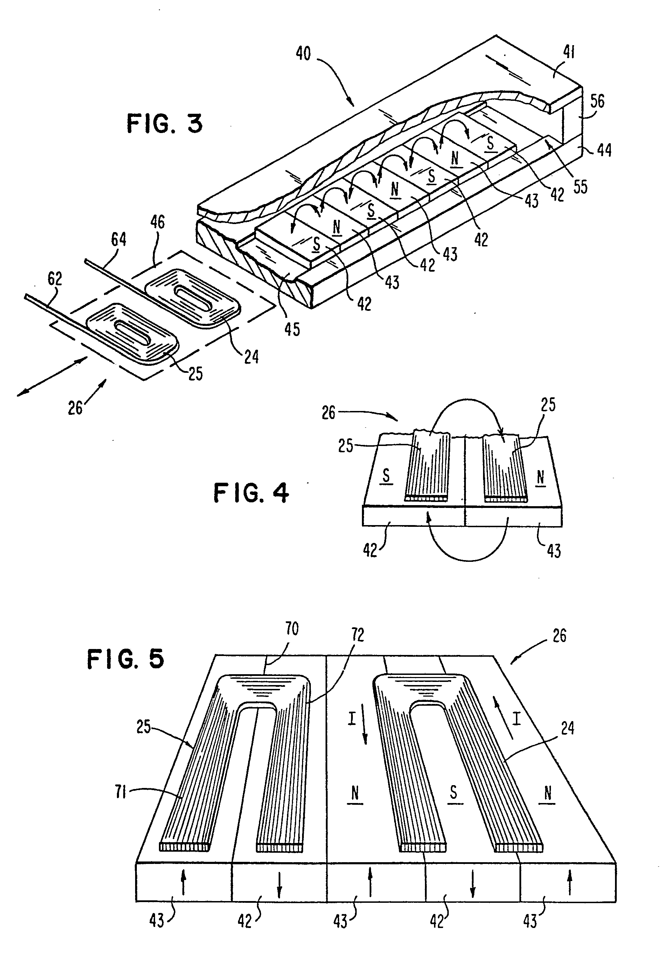

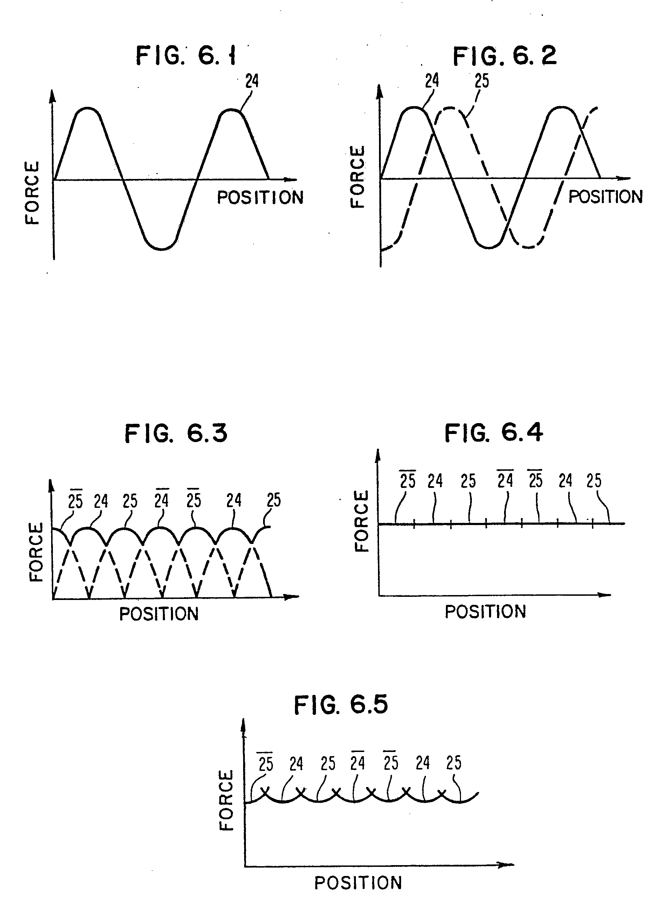

An actuator is shown in greater detail in Fig. 3 with the stator 40 including magnetic yokes 41 and 44 and having alternating polarity permanent magnets 42 and 43 (S and N respectively) resting in a slot 45 in lower magnetic yoke 44. The series of magnets is aligned with magnetiations perpendicular to yoke 44 with alternating poles 42, 43, 42, 43, 42 ... providing alternating north, south, north, south ... south poles from left to right. Extending parallel to yoke 44 above the magnets 42 and 43 is the upper yoke 41 which contains the magnetic field within the stator 40. The armature 26 includes two actuator coils 24 and 25 with connector wires 64 and 62 adapted to fit within the elongated, slot-like space 55 within the stator 40 defined between, lower yoke 44 plus the magnets 42 and 43 below and the upper yoke 41, above. The coils 24 and 25 are spaced an appropriate distance apart so that one of the coils, when actuated by current in wires 64 and 62 respectively, will provide a linear force along the length of the armature 26 on an axis indicated by the double headed arrow in a direction determined by the direction of the current in the coil and the direction of the magnetic field produced by magnets 42 and 43 at the coil energized. The two coils 24 and 25 are alternately energized as the armature 26 moves along the array of magnets 42 and 43 providing a set of actuation forces in a single direction until the servo system stops the armature 26 where it is commanded by the servo control system. The double set of coils 24 and 25 makes it possible to provide a very long stroke plus precision accuracy in positioning over a large range of positions. Fig. 5 shows the coil 24 with current I located with its center aligned over the center of a magnet 42, while coil 25 is centered on the edge 70 between two magnets 42 and 43. In this position, current through coil 24 will cause no net force, whereas current through coil 25 (depending upon its direction) will cause motion tending to center it over one of the two magnets 42 and 43. Another means of illustrating this is shown in Fig. 6.1. If a constant DC current, e.g. one ampere, is passed through coil 24, and the carriage 26 is moved through different positions, an electromagnetic force of varying amplitude and polarity will be experienced. The position at which the force is zero corresponds to the physical situation in Fig. 5, where the legs 71 and 72 of coil 24 are straddling a magnet edge or boundary 70 to produce no net force. If the carriage 46 contained only coil 24, this would lead to unusable regions where the actuator 26 is ineffectual. However, coil 25 is located within the carriage with a different relationship to the magnets, as in Fig. 5, and has a force curve, the dashed line in Fig. 6.2, which is maximum just where the curve of coil 25 has a null.

Desirably a magnetic actuator has a force versus position curve for constant current which ideally would be completely uniform, as in Fig. 6.4. It is a goal of this invention to make the low mass, long stroke actuator present such behavior to the control system (in order to utilize the body of knowledge existing for such system, e.g. the referenced techniques of Oswald and others) by utilizing specialized electronics. One of the functions of this electronics is understood from Fig. 6.3. This shows a force versus position curve for the actuator when the current is switched into coil 24 over the region of its maximum force and efficiency, then into coil 25 for the next region, then into coil 24 with the polarity reversed for the next region, then into coil 25 with polarity reversed, then into coil 24 with normal polarity, and so on, over as long a stroke as might be required. The resulting minor variations of force with position are removed by modulating current, or gain of the current amplifier, with position as shown in Fig. 6.5.

More specifically, in Fig. 6.1, the coil 24 has a force versus position curve which is a sine wave or rounded trapezoidal wave, with the force reaching a minimum at each point of transition of the magnets. Fig. 6.3 shows how the combination of the two coils 24 and 25 generate a composite of force and position values similar to a rectification curve. In general, the force position curve appears to be flat as shown in Fig. 6.4, because the product of the curve force constant in Fig. 6.3 and the gain in curve in 6.5 is constant. One way of obtaining the required polarity reversals is to utilize negative gain constants for the appropriate regions.

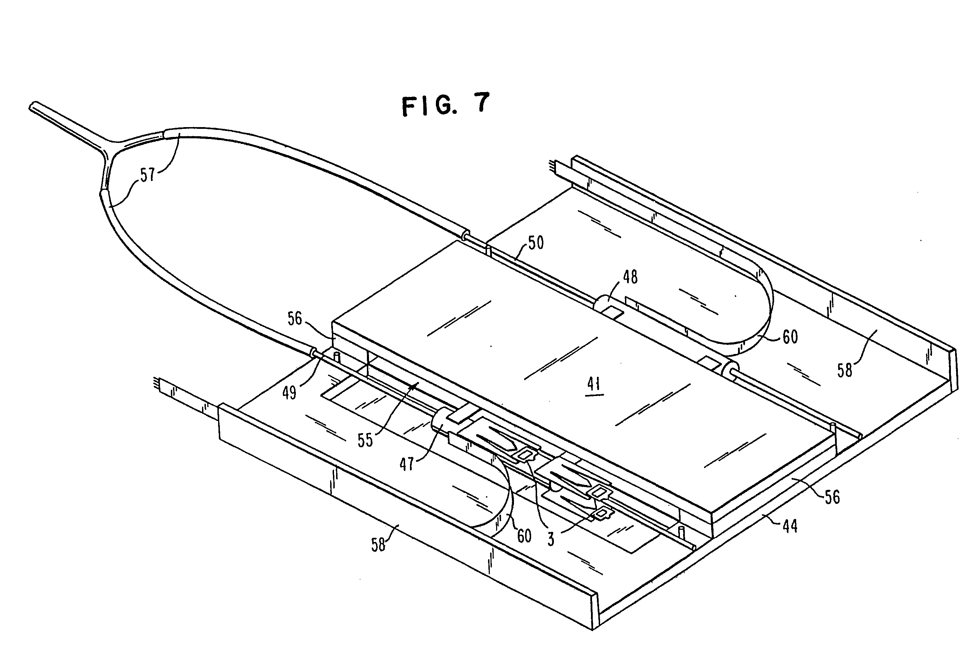

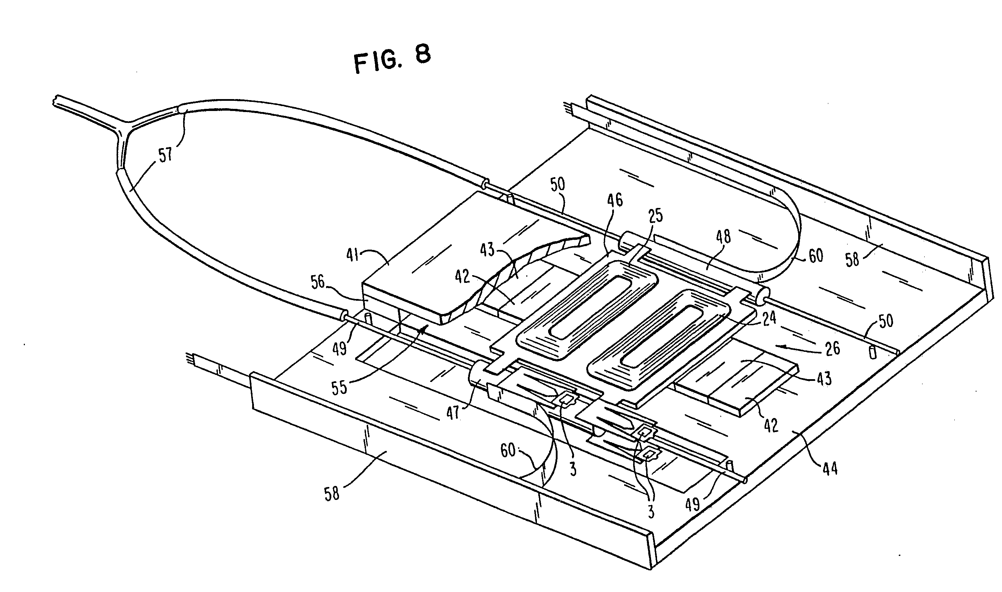

Fig. 7 shows the actuator with the lower magnetic yoke 44 supporting the magnetic yoke end pieces 56, which in turn support and carry the upper magnetic yoke 41. The yokes 41 and 44 and end pieces 56 define a space 55 for the armature 26 which shuttles back and forth within space 55. The bearings tubes 49 and 50 are hollow pneumatic tubes supplied with air from lines 57 which is used to support hollow, cylindrical pneumatic bearings 47 and 48. The armature carries the magnetic recording heads 3 linearly parallel to the tubes 49 and 50. The armature 26 is powered and signals are picked up by the heads 3 from the magnetic recording disks via harness 60. Wiring harnesses 60 each consists of a flexible strip of parallel wires carried by the armature 26 and supported at the broadly extending sides of the lower yoke 44 by side plates 58. In Fig. 8, the armature 26 and magnets 42 and 43 of the stator can be seen because the upper yoke 41 has been partially cut away to show the structure below. Here it can be seen how the elements of the structure all fit together to provide the linear actuator for the heads 3.

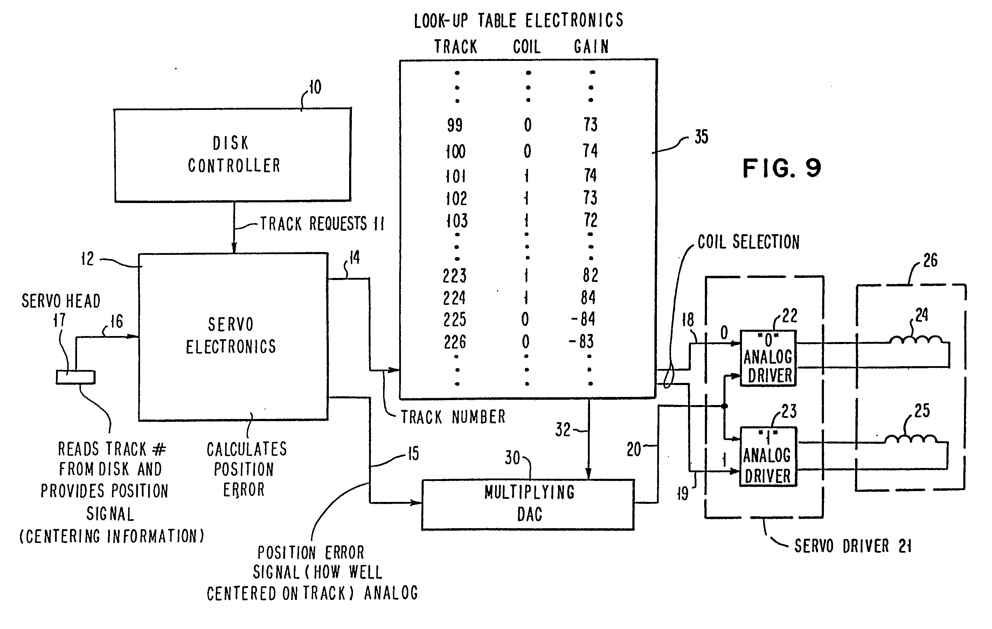

Fig. 9 shows the electronic system for control of the actuator.

The essential function of this head drive control system is to operate a multiple coil linear drive motor to locate one head of a set of magnetic recording heads 3 over a specific track on a multi-track magnetic recording disk 1, 1' or 1'' during each seek operation. Once the track sought has been located by the head (with the head over that track) the system must help the servo mechanism to follow that track during rotation of the disk. Following the track involves moving the head back and forth with the track as it deviates from a fixed position relative to the head.

Disk controller 10 produces track request signals on line 11 which connects to an input of the servo electronics circuit 12. The servo electronics circuit 12 also is connected to receive inputs on line 16 from the servo head 17 (one of the set of heads 3) which is juxtaposed with the disk and reads the track number and provides the position signal (providing centering information). The servo electronics combine the track request signal on line 11 and the track servo signal on line 16 to yield a position error signal on line 15 which varies as a function of the number of track positions or fractional positions of the error. The track number signal on line 14 reflects the track nearest to the actual position of the head as indicated by the signal on line 16 which is used in the seek operation. For a number from line 14 provided, in the left column of the lookup table electronics 35, there is a coil number for operating one of the coil drivers 22 or 23 "0" or "1". Also, there is a gain number which is supplied by electronics 35 via line 32 to the multiplying digital-to-analog controller (DAC) 30 which uses the position error signal on line 15 produced by the servo electronics which calculates the position error (defined as: the difference between the track request (desired track position) on line 11, and the actual track position as indicated by a signal on line 16) to provide an indication of how well the read head is centered on the track over which it is located. The analog input on line 15 to DAC 30 is amplified by the magnitude of the digital gain signal on line 32 and converted into an analog output signal on line 20 which operates driver 22 or 23, as selected by lines 18 and 19, to drive the servo coils 24 and 25 of the armature.

The combination of the two coils, (operating with the array of permanent magnets using the signals provided by the lookup table 35 and the DAC 30) results in a one-for-one correspondence between each track position, the current polarity, gain and selected actuator coil 24 or 25 carried on the carriage 46 of the armature 26.

Naturally, the system may also be used with optical commutating and gain-variation means, by which a partially transparent pattern may be sensed by a photocell device to determine what coil is connected (and with what gain) to the driving source.

In Fig. 3 a magnetic end pole 42 is provided at each end of the array. When the plurality of magnetic pole elements in the linear motor are uniform magnetically (strength and width for a single material) they tend to cause leakage of the magnetic field at the end of the linear motor. The leakage of the field tends to fringe into the magnetic recording medium, the head, etc. This is undesirable. However, we have found that adding magnetic half poles sufficient for optimizing flux shielding at the end of the stator reduces the fringing field to a minimum, and it makes the fringing field compatible with a DASD device.

The problem arises because there is an insufficient return path for the magnetic flux from the end magnets in the array. This effect causes the iron pole pieces to saturate in the region near their ends. The result of such saturation is the risk of disk erasure by stray flux emanating from the saturated iron. Recording head problems can be caused as well, as the heads are near the areas which would be saturated. Further, disk head saturation could be caused by excessive stray fields. The preferred inventive structure is characterized by the inclusion at the distal ends of the array of magnets of a set of half size flux gathering magnets of permanent magnetic material (referred to hereinafter as "half poles") having a flux producing capacity matched to collect the return flux from the adjacent ones of the poles on the stator. Thus, fringing magnetic fields extending into the space in which the disk files are located are minimized.

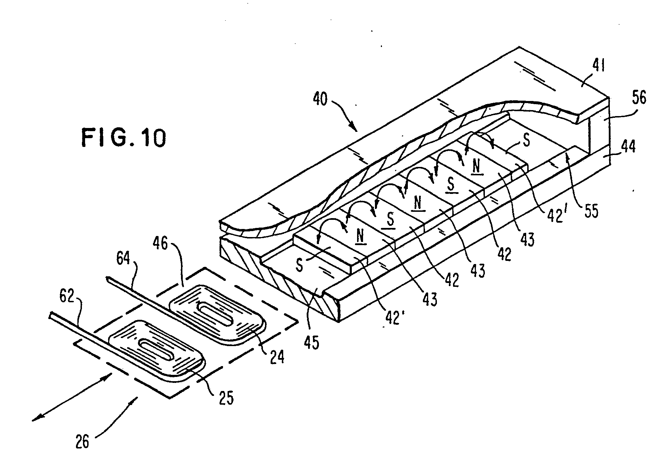

Referring to Fig. 10 which shows a modification of Fig. 3, and which is for a magnetic recording disk file according to the invention, at the ends of the array of magnets 42 and 43 are the magnetically matched "half poles" (end-poles) 42'. The series of magnets 42, 43 and 42' is aligned with magnetizations perpendicular to the plane of yoke 44 with alternating poles 42', 43, 42, 43, 42, 43, 42' providing alternating north and south poles for permitting extended linear motion along the stator by armature 26. Extending parallel to lower yoke 44 above the magnets 42', 42 and 43 is the upper yoke 41 which is used for containing the magnetic field within the stator 40 to the degree possible and which provides a low reluctance path for the magnetic field. The armature 26 includes two actuator coils 24 and 25, with connector wires 64 and 62 adapted to fit within the elongated slot-like space 55 within the stator 40 defined by the magnets 42', 43, 42 etc. and the lower yoke 44 below, and the upper yoke 41. The coils 24 and 25 are spaced apart in side-by-side relationship by an appropriate distance so that one of the coils when actuated by current in wires 64 and 62 respectively will provide a linear force along the length of the armature 26 on an axis indicated by the double headed arrow (in the lower left of Fig. 10) in a direction determined by the direction of the current in the coil and the direction of the magnetic field (produced by the magnets 42, 42' and 43) at the coil energized. The two coils 24 and 25 are alternately energized as the armature 26 moves along the array of magnets 42', 42, and 43 providing actuation force until the servo system stops it at the commanded location.

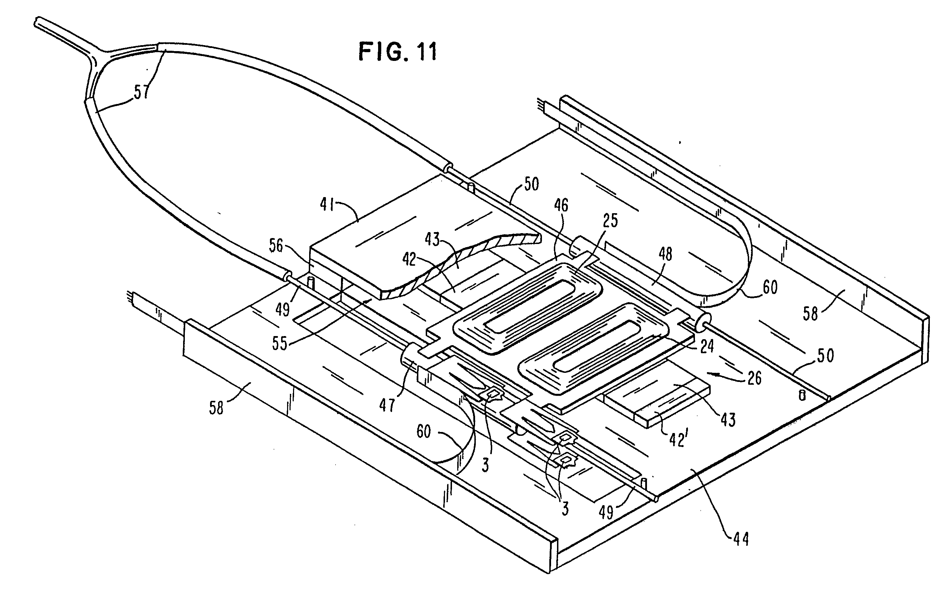

Fig. 11 shows a perspective view of the overall actuator system with a portion of the upper yoke 41 cut away to show the armature 26 and the lower yoke 44 and the magnets 42, 43 and 42'. The lower yoke 44 supports the magnetic yoke end pieces 56 which carry the upper magnetic yoke 41. To repeat, the yokes 41 and 44 and the magnetic poles 42, 43, and 42' define the slot-like space 55 housing the armature 26, which shuttles back and forth between the end pieces 56 within space 55. The bearing supporting tubes 49 and 50 are hollow pneumatic tubes supplied with air from lines 57 which are used to support hollow cylindrical pneumatic bearings 47 and 48. The armature carries the magnetic recording heads 3 linearly parallel to the tubes 49 and 50. Wiring harness 60 provides electrical connections to the moving armature 26 to supply power to the armature 26 and to connect signals read from the magnetic recording heads to the output of the system. Wiring harness 60 consists of a plastic strip with parallel wires flexibly carried by the armature 26 and supported at the sides of the lower yoke 44 by the side plates 58.

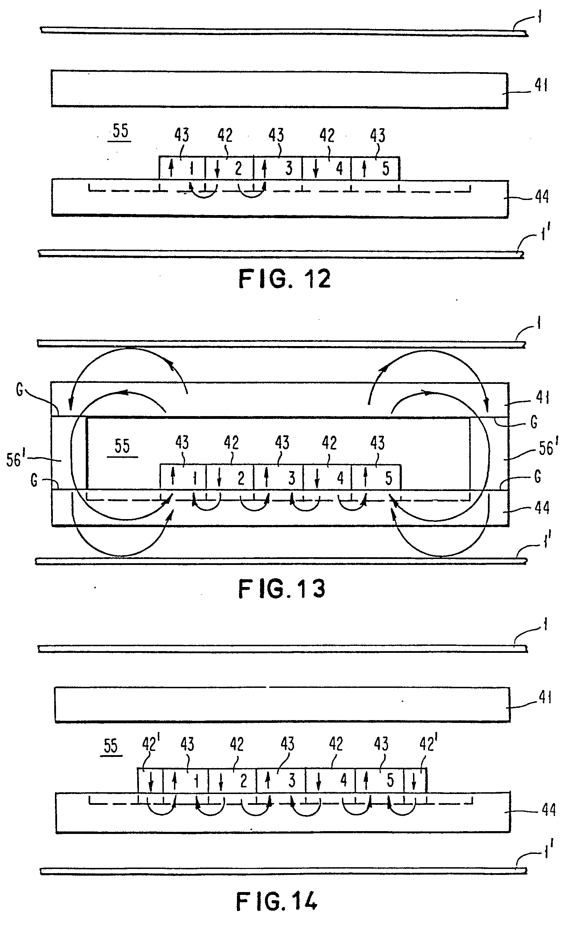

Fig. 12 shows a simple schematic side view of the stator including the two iron plates 41 and 44 and the alternating permanent magnets 42 and 43 as in Figs. 10 and 11 with the end pieces 56 and the end poles 42' eliminated. The alternating magnets 42 and 43 are of equal magnetic strengths, composed of the same material and are of equal sizes. Consider the magnetic flux carried in the iron plates 41 and 44.

Look at what happens to the flux from magnet 2, (in the iron). Half of the flux goes to the right and closes with the magnet 3 and the other half of the flux goes to the left and closes with magnet 1. One can see that in this situation, the iron plate 44, at any one point is required to carry a maximum of 1/2 of the flux from magnet 2.

Now consider the end magnet 1. Where does its flux close? Half closes with magnet 2 as described above, but what about the half? In Fig. 12, the flux would have to close with magnet 4 through the lower plate 44. This doubles the magnetic flux density in the iron plate 44. This will tend to increase the magnetic field projected from plate 44 towards disk 1' and will require spacing disk 1' farther away or otherwise constrain the design of the magnetic recording product to be less efficient.

A first solution to the problem of flux leakage tried (shown in Fig. 13) was to provide an iron closure shield 56' at the ends of the stator which would provide a return path for the magnetic field which was fringing above and below the stator. The problem was not overcome with that solution because the air gap G required between the two halves of the closure shield 41 and 44 was of such high reluctance in the magnetic circuit that there remained very substantial fringing magnetic fields of the kind which had been sought to be eliminated in the first place. Regardless of the reluctance of the iron (or its equivalent used), the reluctance of the air gap is so great that the stray fields are also too great.

The reason that the solution in Fig. 13 is unsatisfactory is quite simply the flux lines as shown are long, circuitous and leaky. Leakiness is the problem.

An alternative way to solve the problem is to provide a solid magnetic closure of low reluctance at the ends of the actuator. However, in view of the need to keep the actuator armature free to move at high speed and the fact that the actuator overshoots the end of the stator, the end of the stator must remain open for a significant distance beyond the end of the poles, on the order of one-half inch or more. That is too far unless the structure is absolutely solid and no flux is caused to leak because of the problem of joining iron layers together. A solid structure is not a practical alternative because of fabrication difficulties. The problem is that the flux densities in the iron 41 and 44 and the magnets 42 and 43 are on the order of 0.6 T (6000 gauss) whereas a flux density of about 3 to 5 gauss is unacceptable in the environment of the disk. It should be noted that the stators comprise a pair of parallel strips of iron 41 and 44 on the confronting faces of which are secured all the pole magnets 42 and 43 as well as the flux gathering magnets 42' at the ends.

It has been found as shown in Fig. 14 that the size of the flux gathering magnets 42' must be exactly half of the size of the magnets 42 and 43 used as poles of the motor when all of the magnets are composed of the same material. In any case, it is clear that the flux generated by the flux gathering magnets must be reasonably well matched to the flux which passes from the last magnetic poles in the motor array through the iron backing strip 44 upon which the magnets are secured. In other words, the amount of fringing flux is reduced by balancing the magnetic structure.

The function of the flux gathering magnets 42' is to provide a balancing magnetic field which minimizes the flux concentration in the yoke structure. Note that this increases neither the thickness nor the area of the flux path nor does it reduce the magnetic field.

In Fig. 14 with the half pole magnets 42' added the flux path of all the full size magnets 42 and 43 is identical, i.e. half of the flux closes to the right and half to the left. The end half-pole magnet closes all its flux (half of the flux from a whole magnet) to the adjacent magnet. There is now no magnetic need for the end closures 56' to carry flux and the flux in the lower plate 44 is nevery greater than 1/2 flux from a whole magnet 42 or 43. Closures 56' do support the weight of iron yoke 41.

For any design of the linear motor disk head actuator that does not have half-pole magnets, the subsequent addition of half-pole magnets reduces the magnetic flux required to be carried by the top and bottom iron plates 41 and 44 by about a factor of two. In practice, this advantage would probably be utilized during the initial design of the actuator. The reduced magnetic flux in the iron would be traded for reduced iron mass, reduced thickness, reduced stray magnetic field and increased gap field. The corresponding benefits would be lower weight, shorter disk stacks, prevention of disk erasure, and shorther seek times.

I. A particular example

One of the first linear motor disk actuators was designed with two 3mm thick iron plates, 3mm thick samarium cobalt magnets, and a 1mm thick air gap. Each magnet was 13mm wide. The flux from one half of any magnet in the middle of the array is returned through the iron plate to an adjacent magnet. That is, the flux from 6mm of magnet is returned through 3mm of iron: there is a concentration of the flux by a factor of two. The measured field in the air gap is about 0.6 T (6,000 gauss), so the field in the iron is about 1.2 T (12,000 gauss). Since this is very good magnetically soft iron with a saturation magnetization of about 2.0 T (20,000 gauss), the iron can easily carry this flux and there is very little stray field outside the structures due to the magnets 42, and 43 in the center of the array.

If half-pole magnets 42' are not used, the situation is very different at the ends of the prototype. The flux from the full width magnets at the ends must be returned through the 3mm thick iron. If all the field from the 13mm wide magnets went through the 3mm thick iron, the iron would be required to carry 2.4 T (24,000 gauss). This is not likely as the saturation magnetization of iron is 2.0 T (20,000 gauss). In reality, some flux is carried through the end closure iron pieces, some flux is carried through the air, and the field in the air gap is reduced so that the flux in the iron stays below 2.0 T (20,000 gauss).

The stray field was measured near the actuator without half-pole magnets. The stray field was about 200 gauss. Changing the number of full width poles 42 and 43 from odd to even changed the distribution of the flux, but the maximum field was still several hundred gauss.

The addition of half-pole magnets 42' at the ends of the magnet array changed the situation. Half the flux from the last full pole magnet 43 returned through the adjacent interior full pole magnet 42 and half the flux is returned through adjacent half-pole magnet 42'. The iron at the ends of the array had to carry only 1.2 T (12,000 gauss), which it could do very easily. The stray field near the actuator with half-pole magnets 42' was measured and shown to be less than $10^{-4}$ T 1 gauss).

II. Disk erasure

When the stray magnetic field from the actuator is too high, the disk is erased by that stray field. For intermediate values of stray field, the parameters for recording on the disk are possibly degraded. Thus the magnitude of the stray field produced by the actuator is very important. A complication is that the recording head acts to concentrate the stray field. Thus a limit for the magnitude of the stray field produced by the actuator must specify the type of recording head used.

The limits for disk erasure can be obtained for different recording heads by intentionally increasing the field until the data recorded on the disk is significantly affected (or the amplitude of the read signal is significantly reduced). These maximum limits vary between 400 and 4000 A/m (5 and 50 Oe) depending on direction, type of recording head and type of air bearing slide. No more than 800 A/m (10 Oe) is permitted for thin film heads.

The limit for recording parameter degradation is not so easy to set. This depends on the detailed requirements on the entire recording channel. However, an estimate of the field allowed can be made by measuring the stray fields that exist in present high performance products. This has been done. For the direction that the recording heads are most sensitive, the stray field in a high performance file product is 7 gauss.

The stray field measured in the prototype actuator without half-poles is several hundred gauss (clearly unacceptable). The stray field measured on every actuator made with half-poles was less than 1 gauss (acceptable).

The number of magnets on the stator is not limited to any particular number, or to an odd or an even number of full magnets 42 and 43. In the examples described above, the half size magnets 42' are of the same polarity with one of them at each end of the array of magnets.

An even or an odd number of full magnets can be used with the half width magnets reducing the stray magnetic fields in either case. Possible magnet configurations are depicted in Table 1, below.

| NUMBER OF FALL-WIDTH MAGNETS | ORIENTATION |
|---|---|
| 2 | + − + − |
| 3 | + − + − + |
| 2N | + − ┄ + − |
| 2N+1 | + − ┄ − + |

TABLE I

## Claims

1. Magnetic recording disk file including at least one magnetic recording disk (1), and a magnetic recording head (3), said head being driven reciprocally generally parallel to said disk from its center to its periphery by the armature of a linear motor having a stator (40) located adjacent to the surface of a disk in said disk file, said stator being constructed of a pair of magnetic yokes (41, 44) comprising parallel plates extending parallel to said disk, with at least one of said yokes (44) carrying an array of regularly spaced and alternating polarity magnetic pole elements (42, 43) including distal poles at each end of said stator, characterised in that the armature includes at least two flat coils, and at the ends of said array, the distal poles are flux gathering end magnets (42) of permanent magnetic material having a flux producing capacity matched to collect the return flux from the pole elements adjacent to said distal poles of said stator, whereby fringing magnetic fields extending into the space in which said disk is located are minimized.

2. A disk file in accordance with claim 1 wherein said end magnets produce substantially half the quantity of flux of said pole elements.

3. A disk file in accordance with any preceding claim, wherein said file includes a stack of a plurality of disks and said stator is located between a pair of said disks within said stack.

4. A disk file as claimed in any preceding claim in which said motor has multiple pairs of magnets including at least two pairs of aligned magnets of said stator.

5. A disk file as claimed in any preceding claim, wherein said motor includes a servo control system employing feedback and stored control signals for operating said coils in sequence as a function of head position and the difference between actual head position and a position command applied to said system.

## Revendications

1. Fichier à disques d'enregistrement magnétiques comprenant au moins un disque (1) d'enregistrement magnétique et une tête (3) d'enregistrement magnétique, ladite tête étant entraînée suivant un mouvement de va-et-vient d'une façon générale parallèlement audit disque depuis son centre jusqu'à sa périphérie par l'induit d'un moteur linéaire comportant un stator (40) placé au voisinage de la surface d'un disque dudit fichier à disques, ledit stator étant constitué d'une paire de culasses magnétiques (41, 44) comprenant des plaques parallèles s'étendant parallèlement audit disque, au moins une desdites culasses (44) supportant une rangée d'éléments polaires magnétiques (42, 43), espacés régulièrement et ayant des polarités alternées, comprenant des pôles distaux à chaque extrémité dudit stator, caractérisé en ce que l'induit comprend au moins deux bobines plates et qu'aux extrémités de ladite rangée, les pôles distaux sont des aimants d'extrémité (42) de rassemblement de flux en matière à aimantation permanente ayant une capacité de production de flux adaptée pour recueillir le flux de retour des éléments polaires adjacents auxdits pôles distaux dudit stator, grâce à quoi les champs magnétiques de diffusion s'étendant jusque dans l'espace où ledit disque se trouve sont réduits à un minimum.

2. Un ficher à disques selon la revendication 1, dans lequel lesdits aimants d'extrémité produisent sensiblement la moitié de la quantité de flux desdits éléments polaires.

3. Un fichier à disques selon n'importe quelle revendication précédente, dans lequel ledit fichier comprend un pile d'une multiplicité de disques et ledit stator se trouve entre une paire desdits disques dans ladite pile.

4. Un fichier à disques selon n'importe quelle revendication précédente, dans lequel ledit moteur comporte de multiples paires d'aimants comprenant au moins deux paires d'aimants alignés dudit stator.

5. Un fichier à disques selon n'importe quelle revendication précédente, dans lequel ledit moteur comprend un système de servo-commande utilisant une rétro-action et des signaux de commande mémorisés pour exciter lesdites bobines successivement en fonction de la position de la tête et de la différence entre la position réelle de la tête et une commande de position appliquée audit système.

## Patentansprüche

1. Magnetplattenspeicher mit zumindest einer Magnetplatte (1) und einem Schreibkopf (3), der im allgemeinen parallel zur Magnetplatte von deren Mittelpunkt zur Peripherie und umgekehrt mit Hilfe des Ankers eines Linearmotors bewegt wird, dessen Stator (40) nahe der Oberfläche einer Platte im Plattenspeicher angebracht ist, wobei der Stator aus zwei Magnetjochen (41, 44) mit sich parallel zur Platte erstreckenden parallelen Platten besteht, wobei zumindest ein Joch (44) eine Reihe von in regelmässigen Abständen angeordneten Magnetpolelementen (42, 43) abwechselnder Polarität trägt, mit distalen Polen an jedem Ende des Stators, dadurch gekennzeichnet, dass der Anker zumindest zwei Flachspulen besitzt und dass an den Enden der Reihe die distalen Pole magnetflussaufnehmende Endmagneten (42) aus dauermagnetischem Material mit einer magnetflusserzeugenden Kapazität sind, die ausgelegt ist, um den Rückfluss von den an die distalen Statorpole angrenzenden Polelementen zu sammeln, wodurch sich in den Plattenraum erstreckende Streumagnetfelder auf ein Minimum beschränkt werden.

2. Plattenspeicher gemäss Anspruch 1, bei dem die genannten Endmagneten im wesentlichen die Hälfte des Magnetflusses der Polelemente erzeugen.

3. Plattenspeicher gemäss einem der vorhergehenden Ansprüche, bei dem der Speicher einen Stapel mit mehreren Platten umfasst und sich ein Stator zwischen je zwei Platten des Stapels befindet.

4. Plattenspeicher gemäss einem der vorhergehenden Ansprüche, bei dem der Motor mehrere Magnetpaare mit mindestens zwei Paar ausgerichteter Statormagneten besitzt.

5. Plattenspeicher gemäss einem der vorhergehenden Ansprüche, bei dem der Motor eine Servosteuerung mit Rückkopplung und gespeicherten Steuersignalen zur Folgesteuerung der Spulen in Abhängigkeit der Schreibkopfposition und der Differenz zwischen der vorhandenen Schreibkopfposition und einem dem System zugeführten Positionsbefehl besitzt.

# FIG. 1

# FIG. 2

**FIG. 3**

**FIG. 4**

**FIG. 5**

## FIG. 6.1

FORCE

POSITION

24

## FIG. 6.2

FORCE

POSITION

24    25

## FIG. 6.3

FORCE

POSITION

$\overline{25}$    24    25    $\overline{24}$    $\overline{25}$    24    25

## FIG. 6.4

FORCE

POSITION

$\overline{25}$    24    25    $\overline{24}$    $\overline{25}$    24    25

## FIG. 6.5

FORCE

POSITION

$\overline{25}$    24    25    $\overline{24}$    $\overline{25}$    24    25

FIG. 7

FIG. 8

0055 334

LOOK-UP TABLE ELECTRONICS

| TRACK | COIL | GAIN |
|---|---|---|
| . | . | . |
| . | . | . |
| . | . | . |
| 99 | 0 | 73 |
| 100 | 0 | 74 |
| 101 | 1 | 74 |
| 102 | 1 | 73 |
| 103 | 1 | 72 |
| . | . | . |
| 223 | 1 | 82 |
| 224 | 1 | 84 |
| 225 | 0 | -84 |
| 226 | 0 | -83 |
| . | . | . |
| . | . | . |

FIG. 9

DISK CONTROLLER — 10

TRACK REQUESTS 11

SERVO ELECTRONICS — 12

SERVO HEAD 17 — 16

READS TRACK # FROM DISK AND PROVIDES POSITION SIGNAL (CENTERING INFORMATION)

CALCULATES POSITION ERROR

TRACK NUMBER — 14

POSITION ERROR SIGNAL (HOW WELL CENTERED ON TRACK) ANALOG — 15

MULTIPLYING DAC — 30

32

COIL SELECTION

18

"0" ANALOG DRIVER — 22

"1" ANALOG DRIVER — 23

SERVO DRIVER 21

20

19

24

25

26

35

0055 334

FIG. 10

FIG. 11

0055334

8

FIG. 12

FIG. 13

FIG. 14